# EUROPÄISCHE PATENTSCHRIFT

(11) **EP 0 572 596 B1**
(45) Veröffentlichungstag und Bekanntmachung des Hinweises auf die Patenterteilung: **30.10.1996**
(21) Anmeldenummer: 92924676.7
(22) Anmeldetag: 05.12.1992
(51) Int. Cl.: B60S 1/16

(54) **VORRICHTUNG ZUR BEGRENZUNG DES WISCHWINKELS EINER SCHEIBENWISCHANLAGE**
DEVICE FOR LIMITING THE SWEEP ANGLE OF WINDSCREEN WIPERS
DISPOSITIF LIMITANT L'ANGLE DE BALAYAGE D'UN SYSTEME D'ESSUIE-GLACE

(30) Priorität: 28.12.1991 DE 4143159
(43) Veröffentlichungstag der Anmeldung: 08.12.1993
(73) Patentinhaber: ITT Automotive Europe GmbH, D-60488 Frankfurt am Main (DE)
(72) Erfinder: BÜHL, Harro, D-7125 Kirchheim (DE); RIENHARDT, Hans-Peter, D-7107 Neckarsulm (DE)
(86) Internationale Anmeldenummer: EP9202818
(87) Internationale Veröffentlichungsnummer: WO9312958

(56) Entgegenhaltungen:
- WO-A-91/00203
- DE-A- 3 740 312
- FR-A- 2 580 567

## Beschreibung

Die Erfindung bezieht sich auf eine Vorrichtung zur Begrenzung des Wischwinkels einer Scheibenwischanlage, insbesondere eines Kraftfahrzeugs, mit einer hin- und hergehend antreibbaren Wischerwelle, die ein Teilritzel eines Getriebes trägt. Das Teilritzel ist drehfest auf der Wischerwelle gehalten, so daß ein Antreiben des Teilritzels stets die Drehung der Wischerwelle in gleichem Drehsinne bewirkt. Der Wischwinkel liegt bei modernen Kraftfahrzeugen in der Größenordnung von 180°, weswegen auch die Wischerwelle jeweils nach etwa 180° oder einem anderen ausgewählten Wischwinkel die Drehrichtung umkehrt. Das Teilritzel wird in bekannter Weise von einem anderen Teilritzel eines Getriebes angetrieben, welches mit einem elektrischen Kleinmotor in bekannter Weise antriebsverbunden ist. Mit Hilfe eines bekannten Kurbeltriebs erreicht man das Umkehren der Wischerwelle jeweils nach Ablauf einer am Drehwinkel entsprechenden Drehbewegung. Dieses Umkehren sollte aber möglichst sanft, also ohne nennenswerten Schlag erfolgen, weil letzterer nicht nur zu störenden Geräuschen, sondern auf die Dauer auch zu nachteiligen Einflüssen auf den gesamten Antrieb führt.

Aus der FR-A-2580567 ist eine Einheit zur Dämpfung der Bewegungsumkehr des Teilritzels beschrieben. Dazu ist ein Schieber vorgesehen, dessen Enden abgewinkelt sind. Das eine Ende greift in die Lücke zwischen den beiden, den zahnlosen Bereich begrenzenden Zähnen des Teilritzels ein, während das andere Ende mit zwei gummielastischen Puffern zusammenwirkt, die im Getriebegehäuse befestigt sind.

Es liegt daher die Aufgabe vor, die Vorrichtung der eingangs beschriebenen Art so weiterzubiden, daß eine gedämpfte Bewegungsumkehr sowohl bei der Hin- als auch bei der Herbewegung der Wischerwelle erreicht wird, die leicht zu montieren ist.

Zur Lösung dieser Aufgabe wird erfindungsgemäß vorgeschlagen, daß die Vorrichtung gemäß dem Oberbegriff des Anspruchs 1 entsprechend dem kennzeichnenden Teil dieses Anspruchs ausgebildet ist. Weil das Federelement dieser Vorrichtung am Gehäuse oder vorzugsweise am Deckel des Getriebes befestigt und somit dreh- sowie verschiebefest gehalten ist und das abgewinkelte freie Ende des bzw. der federelastische Arme in die Lücke zwischen die beiden, den zahnlosen Bereich begrenzenden Zähnen des Teilritzels eingreift, wird der bzw. der jeweils betroffene federelastische Arm federelastisch ausgelenkt, wenn de erste bzw. der letzte Zahn des Teilritzels am abgewinkelten freien Ende des federelastischen

Arms auftrifft. Das Federelement ist nun der Ritzellücke so zugeordnet, daß das Auftreffen des Zahns am Anschlagelement des federelastischen Arms kurz vor der Bewegungsumkehr auftritt. Weil ein zunehmendes Umbiegen des federelastischen Arms einen verstärkten Drehwiderstand bewirkt, wird die Drehendbewegung des Teilritzels und damit auch der Wischerwelle in beiden Endbereichen der Hin- und Herbewegung progressiv abgebremst. Die Federstärke muß in Abhängigkeit von der Motorstärke sowie den übrigen Gegebenheiten des gesamten Antriebs gewählt, ggf. durch Versuche ermittelt werden. Auf jeden Fall vermeidet man mit dieser Vorrichtung eine schlagartige Bewegungsumkehr samt der damit verbundenen schädlichen Nachteile wie bspw. der Geräuschentwicklung. Aus dem Vorstehenden wird deutlich, daß in einer Mittelstellung der Wischerwelle auch die Lücke des Teilritzels eine Mittelstellung einnimmt. Gegenüber letzterer ist sowohl das einzelne Anschlagglied als auch das Anschlaggliedpaar - wenn man diesem den Vorzug gibt - symmetrisch angeordnet.

Eine Weiterbildung der Erfindung sieht vor, daß das Federelement im wesentlichen eine bügelförmige oder U-förmige Gestalt aufweist, wobei der Bügel- oder U-Rücken am Getriebedeckel festgehalten ist und jeder freie Bügelsteg oder U-Schenkel an seinem Endbereich zur Bildung eines Anschlagglieds für einen Zahn des Teilritzels abgewinkelt ist. Die Abwinklung wird vorzugsweise senkrecht zur Ebene des Federelements vorgenommen. Letzteres kann in besonders einfacher und preiswerter Weise hergestellt werden. Als Ausgangsmaterial kommen sowohl Federstahldraht als auch Federstahlblech in Frage. Aufgrund der U- oder Bügelform entstehen quasi zwangsläufig zwei federelastische Arme und damit auch zwei Anschlagglieder. Damit kann man in einfacher Weise auch eine symmetrische Ausbildung des Federelements erhalten.

Eine weitere Ausgestaltung der Erfindung ist dadurch gekennzeichnet, daß die beiden Bügelschenkel im festgehaltenen Bereich des Bügelrückens etwa parallel zueinander verlaufen, einen geringen Seitenabstand aufweisen, und in eine taschenförmige Aufnahme eingeschoben sind, und daß die Bügelschenkel außerhalb der Aufnahme jeweils etwa halbkreisförmig gestaltet sind. Die Tasche befindet sich vorteilhafterweise am Getriebedeckel oder, falls eine Befestigung am Getriebegehäuse vorgesehen ist, dort. Sie ist so dimensioniert, daß der einzusteckende Bereich des Bügelrückens leicht montierbar, andererseits aber möglichst allein nach dem Einstecken schon einigermaßen rüttelfest gehalten ist. Soweit erforderlich, können zusätzliche Maßnahmen zum Festhalten dieses Federelements in der taschenförmigen Aufnahme ergriffen werden. Die beiden halbkreisförmigen Teile der Bügelschenkel formen zusammen etwa einen vollen Kreis, der jedoch nicht ganz geschlossen ist. Vielmehr haben die beiden Anschlagglieder einen Seitenabstand, der etwa demjenigen der festgehaltenen Teilstücke der Bügelschenkel entspricht, wobei diese Teilstücke bevorzugterweise parallel zueinander verlaufen, wie dies auch bei den Anschlaggliedern der Fall ist.

Eine weitere Variante der Erfindung ergibt sich aus Anspruch 4. Sie ermöglicht auf einfache Weise die Bildung der taschenförmigen Aufnahme und auch das sichere Festhalten des Federelements gegen Verschieben und Verdrehen.

Eine andere Ausführungsform der Erfindung sieht vor, daß die beiden Bügelschenkel im festgehaltenen Bereich etwa parallel zueinander verlaufen und im freien Bereich hakenartig geformt sowie gegeneinander hin umgebogen sind. Der festgehaltene Bereich ist hier wesentlich breiter als bei der zuvor erwähnten Ausführungsform. Bevorzugterweise ist aber der Seitenabstand der beiden Anschlagglieder jeweils etwa gleich groß. Bezogen auf ein und denselben Wischerantrieb oder zumindest ähnliche Bauformen hängt es von den Platzverhältnissen im einzelnen ab, welcher dieser beiden Varianten man den Vorzug gibt. Andererseits ist aber auch das federelastische Verhalten nicht genau identisch, so daß auch dies ein Auswahlkriterium sein kann.

In Weiterbildung der Erfindung wird vorgeschlagen, daß der Bügel-Rückensteg und die benachbarten Bereiche der beiden Bügelschenkel mittels eines am Getriebedeckel befestigten Niederhalters an letzterem fixiert sind, wobei der Niederhalter mit jeweils einem hakenförmigen Ansatz den Rückensteg und jeden Bügelschenkel umfasst. Diesen Niederhalter kann man leicht als Biege-Stanzteil herstellen und problemlos insbesondere am Getriebedeckel befestigen, der vielfach auch aus Blech hergestellt wird. Insoweit beschreibt Anspruch 7 eine weitere Ausgestaltung der Erfindung. Das dort erwähnte Annieten muß aber nicht notwendigerweise mit Hilfe loser Niete erfolgen, vielmehr kann es sich auch um angeformte Nietelemente handeln, die lediglich noch breitgedrückt werden. Gleichwertig sind im übrigen auch Schweißpunkte, wenn dies die Materialwahl zuläßt.

Eine andere bevorzugte Ausführungsform der Erfindung ergibt sich aus Anspruch 8. Dabei wird im Gegensatz zu den zuvor beschriebenen Federelementen kein Federstahldraht, sondern ein Federstahlblech verwendet, aus welchem man das Federelement ausstanzt und dann die Anschlagglieder durch Umbiegen bildet. Auch dieses Federelement ist symmetrisch zu einer Längsmittelachse ausgebildet und wird auch symmetrisch zur Ritzellücke montiert, bezogen auf eine Mittelstellung des Teilritzels. Anspruch 9 beschreibt eine Weiterbildung dieser Variante.

Eine weitere Ausführungsform der Erfindung ist Anspruch 10 entnehmbar. Sie ist mit derjenigen des Anspruchs 9 vergleichbar, jedoch mit dem unterschied, daß es sich hier quasi um ein "halbes Federelement" handelt, weswegen hier auch nur ein Anschlagglied vorhanden ist. Dieses muß bei mittiger Lage des Teilritzels mittig zur Ritzellücke stehen. Beim Hinhub trifft an diesem Anschlagglied der eine Endzahn der Ritzellücke auf und beim Rückhub der andere Endzahn. Dies muß bei der Festlegung des Wischwinkels und der Ritzellücke entsprechend berücksichtigt werden.

Die Erfindung wird nachstehend anhand der Zeichnung näher erläutert. Die Zeichnung zeigt verschiedene Ausführungsbeispiele der Erfindung. Hierbei stellen dar:
- Figur 1: eine abgebrochene Draufsicht in Richtung der Längsachse der Wischerwelle auf ein erstes Ausführungsbeispiel der Vorrichtung;
- Figur 2: einen abgebrochenen Schnitt gemäß der Linie II-II der Figur 1;
- Figur 3: ebenfalls einen abgebrochenen Schnitt gemäß der Linie III-III der Figur 1;
- Figur 4: eine Draufsicht auf die Innenseite eines Getriebedeckels, wobei lediglich eine zweite Variante der Erfindung entsprechend der Darstellung der Figur 1 eingezeichnet ist;
- Figur 5: einen Schnitt gemäß der Linie V-V der Figur 4;
- Figur 6: wiederum eine Draufsicht auf eine dritte Ausführungsform der Erfindung;
- Figur 7: eine Ansicht in Richtung A der Figur 6;
- Figur 8: einen Schnitt gemäß der Linie VIII-VIII der Figur 6;
- Figur 9: eine der Figur 4 entsprechende Darstellung eines vierten Ausführungsbeispiels der Erfindung;
- Figur 10: einen Schnitt gemäß der Linie X-X der Figur 9;
- Figur 11: einen Schnitt gemäß der Linie XI-XI der Figur 9.

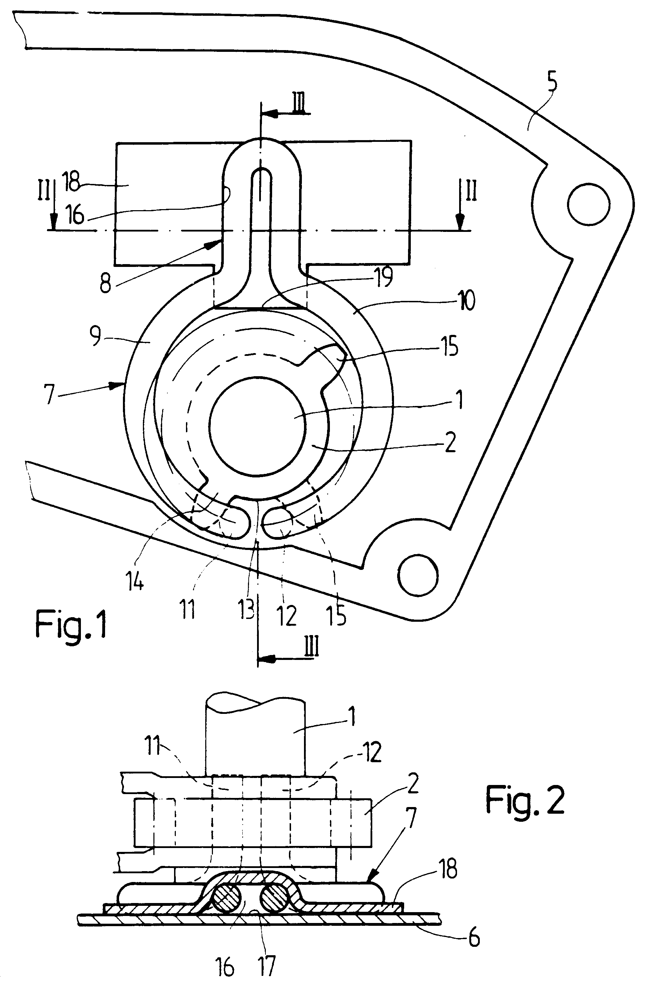

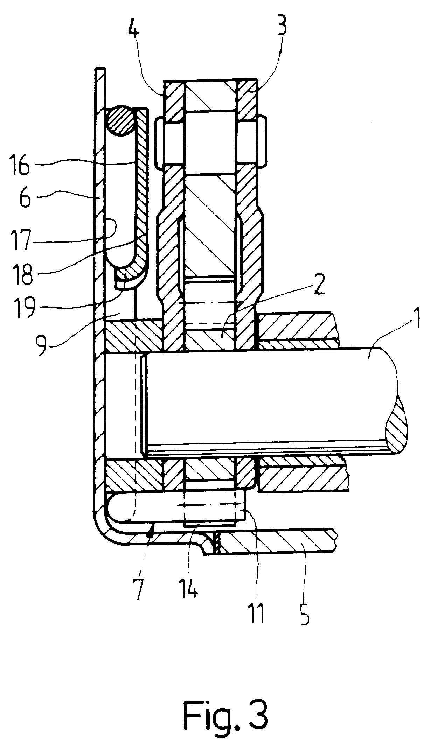

Gemäß Figuren 1 bis 3 ist auf der Wischerwelle 1 ein Teilritzel 2 drehfest gehalten. Es befindet sich in bekannter Weise zwischen zwei Laschen 3 und 4 des Getriebes, welches zwischen den nicht dargestellten elektrischen Kleinmotor und die Wischerwelle 1 geschaltet ist. Diese Teile sind im Getriebegehäuse 5 montiert. Bei den Ausführungsbeispielen ist ein Federelement im Getriebedeckel 6 gehalten. Die Form dieses Federelements 7 entnimmt man insbesondere den Figuren 1 und 3. Es hat gemäß Figur 1 eine im wesentlichen bügelförmige Gestalt, wobei der Bügelrücken 8 am Getriebedeckel 6 verschiebe-, dreh- und aushebefest gehalten ist. Jeder der beiden Bügelschenkel 9 und 10 ist an seinem Endbereich zur Bildung eines Anschlagglieds 11 bzw. 12 senkrecht zur Ebene der Bügelschenkel abgewinkelt. Diese Anschlagglieder greifen in die Ritzellücke 13, welche durch die beiden Endzähne 14 und 15 definiert ist. In Figur 1 ist das Ritzel 2 in der einen Endstellung gezeigt, in der der Zahn 14 am Anschlagglied 11 anliegt. Die Position des Zahnes 15 in der anderen Endstellung des Ritzels 2 ist gestrichelt eingezeichnet. Der Zeichnung kann man entnehmen,daß die federelastischen Arme des Federelements 7, welche den Bügelschenkeln 9 und 10 entsprechen, in einer zur Ritzelebene etwa parallelen Ebene elastisch verschwenkbar sind. Infolgedessen werden die Anschlagglieder 11 und 12 auf einer bogenförmigen Bahn bewegt.

Die beiden Bügelschenkel 9 und 10 verlaufen im festgehaltenen Bereich des Bügelrückens 8 etwa parallel zueinander und sie haben gemäß Figur 1 einen relativ geringen Seitenabstand. Außerhalb dieses festgehaltenen Bereichs haben die Bügelschenkel eine etwa halbkreisförmige Gestalt. Der festgehaltene Bereich, der dem Bügelrücken 8 entspricht, ist in eine taschenförmige Aufnahme 16 des Getriebedeckels 6 eingeschoben. Sie ist durch die Getriebedeckel-Innenfläche 17 und einen daran befestigten Niederhalter 18 gebildet. Letzterer hat eine Bügelform, wobei seine beiden Bügelschenkel bspw. durch Schweißpunkte am Deckel gehalten sein können. Seine Längsachse verläuft gemäß Figur 1 senkrecht zur Längsachse des Federelements 7. Er besitzt aber auch noch einen seitlich abstehenden hakenförmigen Mittellappen 19, mit welchem er den Übergangsbereich von den geraden zu den gebogenen Schenkelbereichen übergreift, wie man besonders gut Figur 3 entnehmen kann.

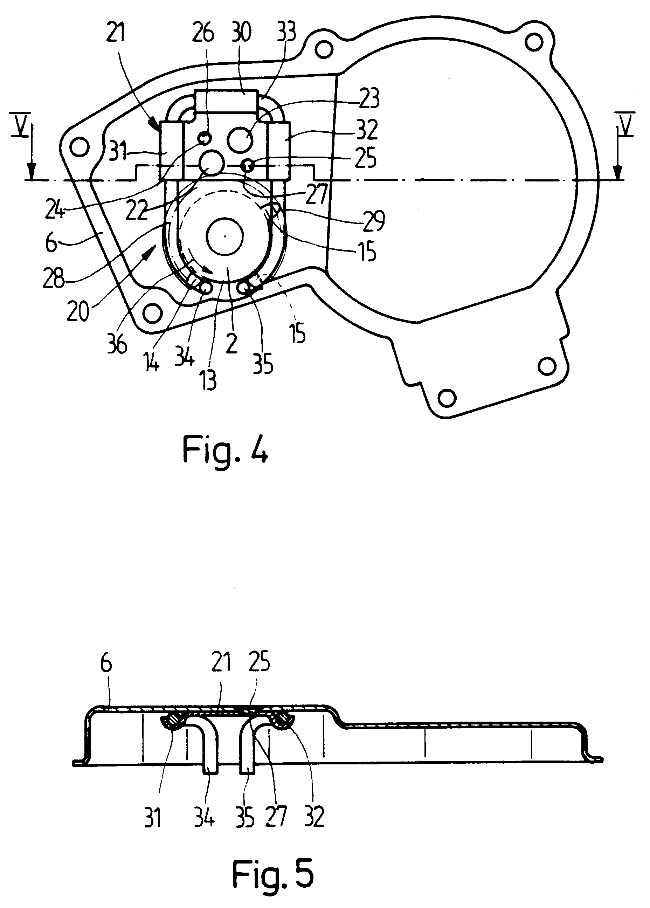

Beim Ausführungsbeispiel der Figuren 4 und 5 ist das Federelement 20 auch wieder in eine Höhlung des Getriebedeckels 6 eingelegt und dort mit Hilfe eines Niederhalters 21 fixiert. Es hat wiederum eine Bügelform, die jedoch von derjenigen der Figur 1 abweicht. Der Bügelrücken ist breiter, weswegen der Niederhalter 21 größer sein muß. Die Befestigung am Getriebedeckel erfolgt auch hier mit Hilfe zweier Schweißpunkte 22 und 23. Zur Sicherung der genauen gegenseitigen Lage von Getriebedeckel 6 und Niederhalter 21 sind am Getriebedeckel zwei Ausprägungen 24 und 25 angebracht. Am Niederhalter 21 befinden sich zwei zugehörige Bohrungen 26 und 27.

Die beiden Bügelschenkel 28 und 29 des Federelements 20 verlaufen im festgehaltenen Bereich auch wieder parallel zueinander, jedoch, wie gesagt, mit größerem Seitenabstand. Im freien Bereich, also soweit sie über den Niederhalter 21 vorstehen, haben sie eine hakenartige Gestalt, wobei die freien Hakenenden gegeneinander hin umgebogen sind und vorzugsweise Teile eines Kreises bilden. Der Niederhalter hat drei hakenförmige Ansätze 30,31 und 32, die rechtwinklig zueinander angeordnet sind. Die beiden parallel verlaufenden Ansätze 31 und 32 übergreifen die festgehaltenen Bügelschenkelteile, während der hakenförmige Ansatz 30 den Rückensteg 33 des Federelements 20 umfasst. Damit ist auch dieses Federelement verschiebe-, dreh- und aushebefest am Getriebedeckel 6 gehalten.

Die freien Enden der Bügelschenkel 28 und 29 sind wiederum aus der Ebene des Federelements senkrecht herausgebogen, wodurch Anschlagglieder 34 und 35 entstehen. Auch sie greifen in eine Ritzellücke 13 ein. Figur 4 zeigt zwei Endzähne 14 und 15 des Teilritzels 2, deren Umfangsabstand die Ritzellücke 13 definiert. Der Endzahn 14 ist etwa in der Drehstellung gezeigt, in der er bei der Hin- bzw. bei der Herdrehung der Wischerwelle 1 am zugeordneten Anschlagglied 34 auftrifft. Die entsprechende Position des Zahns 15 ist gestrichelt eingezeichnet.

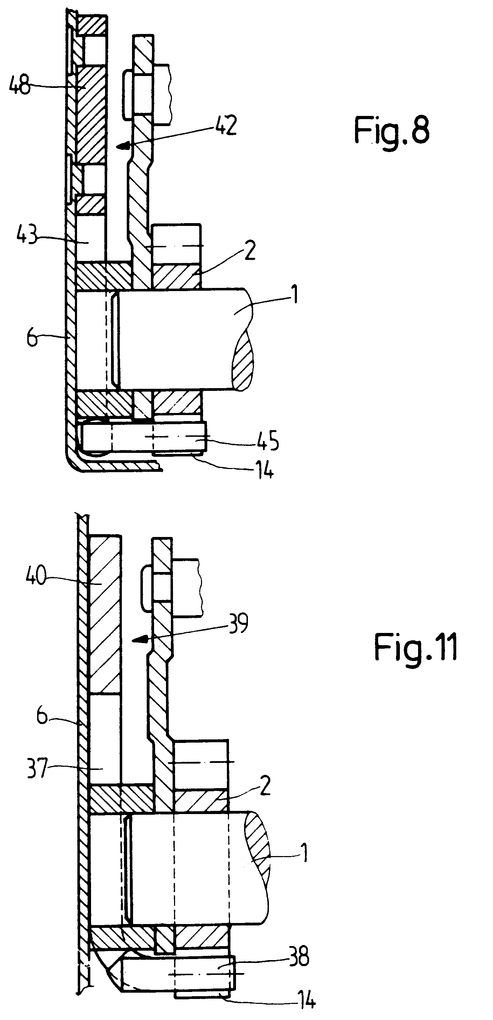

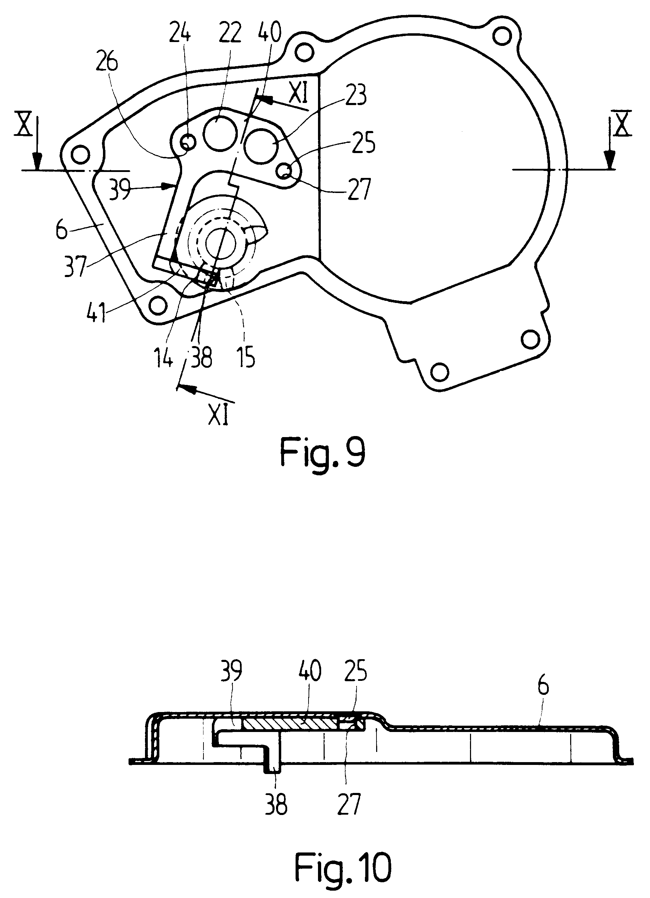

Was die Wirkungsweise dieser Vorrichtung angeht, so trifft bspw. bei einer Drehbewegung des Ritzels in Pfeilrichtung 36 der Endzahn 14 kurz vor der Bewegungsumkehr am Anschlagglied 34 auf. Beim weiterdrehen wird der Bügelschenkel 28 im Sinne des Pfeils 36 federelastisch gebogen, was zu einem Abbremsen der Drehbewegung des Teilritzels und damit einer gedämpften Drehendbewegung führt. Wenn sich die Wischerwelle 1 in Gegenrichtung dreht, so trifft der Endzahn 15, wiederum kurz vor der Bewegungsumkehr, am Anschlagglied 35 auf, wodurch dann der Bügelschenkel 29 federelastisch entgegen dem Pfeil 36 gebogen wird. Man erreicht somit auch bei dieser Drehrichtung des Teilritzels 2 eine federelastisch gedämpfte Bewegungsumkehr. In gleicher Weise wirken alle anderen Ausführungsformen, wobei die Konstruktion der Figuren 9 bis 11 von den drei anderen dadurch abweicht, daß dort nur ein Federschenkel vorhanden ist und demzufolge auch nur ein Anschlagglied 38. Die prinzipielle Wirkungsweise ist aber auch dort nicht anders als bei den Figuren 1 bis 8.

Während die Federelemente der Figuren 1 bis 5 aus Federstahldraht hergestellt sind, handelt es sich beim Federelement 39 der Figur 9 um ein Stanzteil. Es besteht im wesentlichen aus einer Befestigungsplatte 40, sowie einem von deren einem Ende ausgehenden, zweimal gegenläufig abgewinkelten, den federelastischen Arm bildenden Federschenkel 37. Die Befestigung kann auch hier über zwei Schweißpunkte 22,23 erfolgen, und die vorherige Fixierung mittels zweier Ausprägungen 24 bzw. 25 des Getriebedeckels 6 und zweier Durchbrüche oder Bohrungen 26 bzw. 27.

Der Federschenkel 37 hat vor seinem Verbiegen eine gekröpfte Form mit einem an die Befestigungsplatte 40 anschließenden ersten Abschnitt, einem parallel dazu ausgerichteten zweiten Abschnitt 38 am freien Ende und einem sich senkrecht zum ersten und zweiten Abschnitt erstreckenden und sich zwischen diesen beiden Abschnitten befindlichen dritten Abschnitt 41.

Der dritte Abschnitt 41 ist gegen den ersten Abschnitt um 90° abgebogen, wodurch aus dem zweiten Abschnitt ohne Biegung des zweiten Abschnitts gegenüber dem dritten Abschnitt das Anschlagglied 38 entstand. Dieses greift gemäß Figur 9 in die Ritzellücke des Teilritzels 2 ein. In Figur 9 sind die beiden Endzähne 14 und 15 jeweils etwa in der Stellung gezeichnet, die sie bei der Bewegungsumkehr des Ritzels 2 in der einen Endlage einnehmen. Die Position des Zahnes 15 in der anderen Endlage des Ritzels 2 ist gestrichelt eingezeichnet.

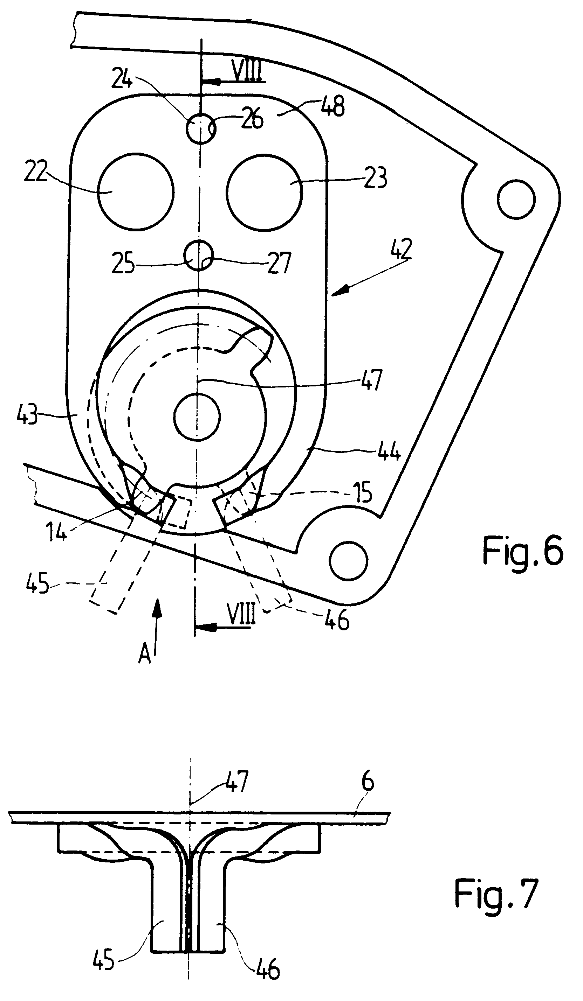

Auch das Federelement 42 der Figuren 6 bis 8 ist ein Stanzteil. Es besitzt aber im Gegensatz zur Figur 9 zwei Bügel- oder Federschenkel 43,44. Grob betrachtet kann man sie nach dem Ausstanzen als S-förmig bezeichnen (siehe gestrichelte Linien in Figur 6). Sie sind aber verschränkt und am freien Ende zur Bildung von Anschlaggliedern 45 und 46 umgebogen, so daß die in der Draufsicht nach Figur 6 die Form eines C bzw. Spiegelbilds dazu haben. Die Anschlagglieder (sofern unbelastet) stehen verhältnismäßig weit auseinander. Figur 7 zeigt aber, daß jedes Anschlagglied in der entsprechenden Umkehrlage des Ritzels etwa die Längsmittelachse 47 des Federelements 42 erreicht. Dabei nehmen dann die Endzähne 14 und 15 nacheinander die aus Figur 6 ersichtliche für den Zahn 14 mit durchgehenden und für den Zahn 15 mit gestrichelten Linien gekennzeichnete Umkehrlage ein.

Auch das Federelement 42 besitzt eine Befestigungsplatte 48, welche gewissermaßen einen breiten Bügelrücken bildet. Die Befestigung am Getriebedeckel 6 kann auch hier mittels zweier Schweißpunkte 22 und 23 erfolgen. Zur Fixierung kann man wiederum zwei Ausprägungen 24 und 25 des Getriebedeckels 6 vorsehen, die in Ausnehmungen oder Bohrungen 26,27 des Federelements bzw. seiner Befestigungsplatte 48 eingreifen.

## Patentansprüche

1. Vorrichtung zur Begrenzung des Wischwinkels einer Scheibenwischanlage, insbesondere eines Kraftfahrzeuges, mit einer hin- und hergehend antreibbaren Wischwelle (1), die ein Teilritzel (2) des Getriebes trägt mit einer Einheit, die eine gedämpfte Bewegungsumkehr des Teilritzels (2) bewirkt, wobei die Einheit einen Arm aufweist, dessen abgewinkeltes Ende (11,12,34,35,38,45,46) in die Lücke (13) zwischen den beiden, den zahnlosen Bereich begrenzenden Zähnen (14,15) des Teilritzels (2) eingreift, dadurch **gekennzeichnet,** daß der Arm (19,28,29,37,43,44) federelastisch ausgebildet ist und Teil eines Federelementes ist, das am Gehäuse (5) oder am Deckel (6) des Getriebes befestigt ist, wobei der federelastische Arm in einer zur Ritzelebene etwa parallelen Ebene elastisch verschwenkbar ist.

2. Vorrichtung nach Anspruch 1, dadurch gekennzeichnet, daß das Federlement (7,20,42) im wesentlichen eine bügelförmige oder U-förmige Gestalt aufweist, wobei der Bügel- oder U-Rücken (z.B. 8) festgehalten ist, und jeder freie Bügel- oder U-Schenkel (9,10;28,29;43,44) an seinem Endbereich zur Bildung eines Anschlagglieds (11,12;34,35;45,46) für einen Zahn (14,15) des Teilritzels (2) abgewinkelt ist.

3. Vorrichtung nach Anspruch 2, dadurch gekennzeichnet, daß die beiden Bügelschenkel (9,10) im festgehaltenen Bereich des Bügelrückens (8) etwa parallel zueinander verlaufen, einen geringen Seitenabstand aufweisen und in eine taschenförmige Aufnahme (16) eingeschoben sind, und daß die Bügelschenkel (9,10) außerhalb der Aufnahme (16) jeweils etwa halbkreisförmig gestaltet sind.

4. Vorrichtung nach Anspruch 3, dadurch gekennzeichnet, daß die taschenförmige Aufnahme (16) durch die Deckelinnenfläche (17) und einen daran befestigten Niederhalter (18) gebildet ist, der den Bügelrücken (8) quer zu dessen Längsmittelachse übergreift und mit einem seitlich abstehenden hakenförmigen Mittellappen (19) den Übergangsbereich von den geraden zu den gebogenen Schenkelbereichen übergreift.

5. Vorrichtung nach Anspruch 2, dadurch gekennzeichnet, daß die beiden Bügelschenkel (28,29) im festgehaltenen Bereich etwa parallel zueinander verlaufen und im freien Bereich hakenartig geformt sowie gegeneinander hin umgebogen sind.

6. Vorrichtung nach Anspruch 5, dadurch gekennzeichnet, daß der Bügel-Rückensteg (33) und die benachbarten Bereiche der beiden Bügelschenkel (28,29) mittels eines am Getriebedeckel (6) befestigten Niederhalters (21) am Getriebedeckel (6) fixiert sind, wobei der Niederhalter mit jeweils einem hakenförmigen Ansatz (30,31,32) den Rückensteg (33) und jeden Bügelschenkel (28,29) umfaßt.

7. Vorrichtung nach Anspruch 4 oder 6, dadurch gekennzeichnet, daß der Niederhalter (24) an den Getriebedeckel (6) angenietet und mittels zweier warzenartiger Ausprägungen (24,25) des Deckels (6) vor dem Annieten fixiert ist, wobei jede Ausprägung in einen Durchbruch (26,27) des Niederhalters (21) eingreift.

8. Vorrichtung nach Anspruch 1 oder 2, dadurch gekennzeichnet, daß das Federlement (42) ein Stanzteil ist und im wesentlichen aus einer Befestigungsplatte (18) sowie zwei davon ausgehenden, symmetrisch angeordneten, die federelastischen Arme bildenden, etwa S-förmigen Federschenkeln (43,44) besteht, wobei die freie S-Schenkelhälfte zur Bildung jeweils eines Anschlagglieds (45,46) gegenüber der Federelementebene abgewinkelt ist.

9. Vorrichtung nach Anspruch 1 oder 2, dadurch gekennzeichnet, daß das Federelement (39) ein Stanzteil ist und im wesentlichen aus einer Befestigungsplatte (40) sowie einem von deren einem Ende ausgehenden, zweimal gegenläufig abgewinkelten, den federelastischen Arm bildenden Federschenkel (39) besteht, wobei sich die freie Abwinklung zur Bildung eines Anschlagglieds (38) etwa senkrecht zur Federelementebene erstreckt.

10. Vorrichtung nach Anspruch 8 oder 9, dadurch gekennzeichnet, daß die Befestigungsplatte (48) zwei insbesondere auf der Symmetrie-Längsachse gelegene Durchbrüche (26,27) aufweist, in die je eine warzenartige Ausprägung (24,25) des Deckels (6) eingreift oder umgekehrt, und daß die Befestigungsplatte (48) über zwei Schweißpunkte (22,23) mit dem Deckel (6) verbunden ist.

## Claims

1. An apparatus for limiting the wiping angle of a windscreen wiper unit, in particular for an automotive vehicle, including a wiper spindle (1) drivable to move to-and-fro and bearing a part-pinion (2) of a gearing along with an assembly which causes a cushioned inversion of motion of the part-pinion (2), the assembly including an arm having its angled-off end (11, 12, 34, 35, 38, 45, 46) engage into the gap (13) between the two teeth (14, 15) of the part-pinion (2) defining the toothless range,
**characterized** in that the arm (19, 28, 29, 37, 43, 44) is springy and part of a spring element which is fixed to the housing (5) or the cover (6) of the gearing, and the spring arm is elastically swingable in a plane which is roughly parallel to the plane of the pinion.

2. An apparatus as claimed in claim 1,
**characterized** in that the spring element (7, 20, 42) is substantially configured in the shape of a bracket or a U, the back of the bracket or of the U (e.g. 8) being retained, and each free bracket leg or U leg (9, 10; 28, 29; 43, 44) being angled off at its end range for the formation of a stop member (11, 12; 34, 35; 45, 46) for a tooth (14, 15) of the part-pinion (2).

3. An apparatus as claimed in claim 2,
**characterized** in that, in the retained portion of the bracket back (8), the two bracket legs (9, 10) extend roughly in parallel to each other, have a slight lateral distance and are inserted into a bag-shaped receptacle (16), and in that outside the receptacle (16) the bracket legs (9, 10) each have a roughly semicircular configuration.

4. An apparatus as claimed in claim 3,
**characterized** in that the bag-shaped receptacle (16) includes the cover inside surface (17) and a hold-down clamp (18) which is fastened to the cover and straddles the bracket back (8) transversely to the longitudinal centre line of the bracket back, and which includes a hook-shaped central lug (19) projecting along the centre line that straddles the range of transition from the straight to the curved leg ranges.

5. An apparatus as claimed in claim 2,
**characterized** in that the two bracket legs (28, 29) extend roughly in parallel to each other in the retained range and have a hooklike configuration and are bent over against each other in the free range.

6. An apparatus as claimed in claim 5,
**characterized** in that the bracket back stem (33) and the neighbouring ranges of the two bracket legs (28, 29) are fixed to the gearing cover (6) by means of a hold-down clamp (21) which is fastened to the gearing cover (6), the hold-down clamp (21) with one each hook-shaped attachment (30, 31, 32) making catch around the back stem (33) and around each bracket leg (28, 29).

7. An apparatus as claimed in claim 4 or in claim 6,
**characterized** in that the hold-down clamp (24) is riveted to the gearing cover (6) and is located before riveting by means of the two nipple-shaped embossed protuberances (24, 25) of the cover (6), each embossed protuberance engaging an opening (26, 27) of the hold-down clamp (21).

8. An apparatus as claimed in claim 1 or in claim 2,
**characterized** in that the spring element (42) is a stamped part and substantially includes a fastening plate (18) and two generally S-shaped spring legs (43, 44) extending from the fastening plate that is arranged symmetrically and constitutes the springy arms, the free S-shaped leg half being angled off with respect to the plane of the spring element to form a stop member (45, 46).

9. An apparatus as claimed in claim 1 or in claim 2,
**characterized** in that the spring element (39) is a stamped part and substantially includes a fastening plate (40) and one spring leg (39) projecting from one end of the fastening plate and being angled off twice in contrasting directions, and forming the springy arm, the free angling-off extending roughly at right angles to the plane of the spring element to form one stop member (38).

10. An apparatus as claimed in claim 8 or in claim 9,
**characterized** in that the fastening plate (48) has two openings (26, 27), preferably positioned on the longitudinal axis of symmetry, which are engaged by each of the nipple-shaped embossed protuberances (24, 25) of the cover (6) or vice versa, and in that the fastening plate (48) is coupled to cover (6) by two welding spots (22, 23).

## Revendications

1. Dispositif de limitation de l'angle de balayage d'un essuie-glace, notamment pour véhicule automobile, comprenant un axe d'essuie-glace (1), pouvant être entraîné dans un mouvement alternatif et portant un pignon à denture partielle (2) du mécanisme réducteur, et une unité qui provoque un changement de sens du mouvement du pignon à denture partielle (2) qui est amorti, l'unité comprenant un bras dont une extrémité coudée (11, 12, 34, 35, 38, 45, 46) est engagée dans l'espace libre (13) situé entre les deux dents (14, 15) du pignon à denture partielle (2) qui délimitent la zone dépourvue de dents, caractérisé en ce que le bras (19, 28, 29, 37, 43, 44) est réalisé de façon à présenter une élasticité analogue à celle d'un ressort et fait partie d'un élément formant ressort qui est fixé sur le boîtier (5) ou sur le couvercle (6) du mécanisme réducteur, le bras élastique étant agencé de façon à pouvoir pivoter élastiquement dans un plan pratiquement parallèle au plan du pignon.

2. Dispositif selon la revendication 1, caractérisé en ce que l'élément formant ressort (7, 20, 42) a essentiellement une forme en étrier ou en U, la base de l'étrier ou du U (par exemple 8) étant maintenue et chaque branche libre (9, 10 ; 28, 29 ; 43, 44) de l'étrier ou du U étant coudée dans sa zone d'extrémité de façon à former une partie de butée (11, 12 ; 34, 35 ; 45, 46) pour une dent (14, 15) du pignon à denture partielle (2).

3. Dispositif selon la revendication 2, caractérise en ce que, dans la zone maintenue de la base d'étrier (8), les deux branches d'étrier (9, 10) sont orientées d'une manière pratiquement parallèle l'une à l'autre, présentent un faible écartement dans le sens transversal et sont emboîtées dans un logement (16) en forme de poche et en ce qu'en dehors du logement (16), les branches d'étrier (9, 10) ont chacune une forme pratiquement semi-circulaire.

4. Dispositif selon la revendication 3, caractérisé en ce que le logement (16) en forme de poche est formé par la surface intérieure (17) du couvercle et un élément de retenue (18) qui est fixé à cette surface intérieure et recouvre la base d'étrier (8) transversalement à son axe central longitudinal et qui, par une patte centrale (19) en saillie transversale et en forme de crochet, recouvre la zone de transition entre les zones rectilignes et les zones courbes des branches.

5. Dispositif selon la revendication 2, caractérisé en ce que, dans la zone maintenue, les deux branches d'étrier (28, 29) sont orientées d'une manière pratiquement parallèle l'une à l'autre et en ce que, dans la zone libre, elles sont en forme de crochet et courbées l'une vers l'autre.

6. Dispositif selon la revendication 5, caractérisé en ce que la base d'étrier (33) et les zones voisines des deux branches d'étrier (28, 29) sont fixées sur le couvercle de mécanisme réducteur (6) au moyen d'un élément de retenue (21) fixé sur le couvercle de mécanisme réducteur (6), l'élément de retenue entourant respectivement la base (33) et chaque branche d'étrier (28, 29) au moyen d'une partie de prolongement en forme de crochet (30, 31, 32) respective.

7. Dispositif selon la revendication 4 ou 6, caractérisé en ce que l'élément de retenue (24) est riveté sur le couvercle de mécanisme réducteur (6) et, avant le rivetage, est fixé au moyen de deux parties embouties (24, 25) du couvercle (6) qui sont en forme de bossage, chaque partie emboutie étant engagée dans une ouverture (26, 27) de l'élément de retenue (21).

8. Dispositif selon la revendication 1 ou 2, caractérisé en ce que l'élément formant ressort (42) est une pièce découpée à l'emporte-pièce et est constitué essentiellement d'une plaque de fixation (18) et de deux branches formant ressort (43, 44), pratiquement en S, qui partent de la plaque de fixation, sont disposées d'une manière symétrique et forment les bras élastiques, la moitié libre des branches en S étant coudée vis-à-vis du plan de l'élément formant ressort de façon à former, pour chacune, une partie de butée (45, 46).

9. Dispositif selon la revendication 1 ou 2, caractérisé en ce que l'élément formant ressort (39) est une pièce découpée à l'emporte-pièce et est constitué essentiellement d'une plaque de fixation (40) et d'une branche formant ressort (39) qui part de l'une des extrémités de cette plaque de fixation, est coudée deux fois dans des sens opposés et forme le bras élastique, la partie libre pliée étant orientée d'une manière pratiquement perpendiculaire au plan de l'élément formant ressort de façon à former une partie de butée (38).

10. Dispositif selon la revendication 8 ou 9, caractérisé en ce que la plaque de fixation (48) comporte deux ouvertures (26, 27), disposées notamment sur l'axe longitudinal de symétrie, dans chacune desquelles une partie emboutie (24, 25) du couvercle (6), en forme de bossage, s'emboîte ou vice-versa et en ce que la plaque de fixation (48) est reliée au couvercle (6) au moyen de deux points de soudure (22, 23).
